# EUROPÄISCHE PATENTSCHRIFT

(11) **EP 0 813 812 B1**
(45) Veröffentlichungstag und Bekanntmachung des Hinweises auf die Patenterteilung: **27.03.2002**
(21) Anmeldenummer: 97107914.0
(22) Anmeldetag: 15.05.1997
(51) Int. Cl.: A21C 5/02, A21C 5/04

(54) **Teigverarbeitungsanlage**
Dough treating device
Appareil pour le traitement de pâte

(30) Priorität: 19.06.1996 DE 19624401
(43) Veröffentlichungstag der Anmeldung: 29.12.1997
(73) Patentinhaber: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Schneck, Herbert, Dipl.-Phys., Dr.

(56) Entgegenhaltungen:
- DE-A- 2 315 977
- DE-A- 2 949 562
- DE-A- 2 950 127
- DE-A- 3 911 521
- DE-A- 4 032 980
- DE-C- 3 530 724

## Beschreibung

Die Erfindung richtet sich auf eine Teigverarbeitungsanlage mit einer Steuerung, wobei aus einem Teigvorrat mittels einer Mehrzahl von Teigteil- und -dosiereinrichtungen umfassend einen Meßkolben je einem Gebäckstück entsprechende Teigmengen abgeteilt und einer gesonderten Weiterverarbeitung zugeführt werden, und wobei einzelne Meßkolben verriegelbar sind.

Derartige Teigverarbeitungsanlagen dienen der Herstellung von Backprodukten, wie Brötchen, Berliner Krapfen, Brezen oder Baguettes.

Die Meßkolben derartiger Anlagen können unterschiedlich ausgebildet sein, beispielsweise als Drehschieber, Teilwalzen, Auswiegetrommeln, Schieberkästen oder dergleichen. In jedem Fall wird durch eine Schiebe- oder Schwenkbewegung eines Meßkolbens eine bestimmte Teigmenge abgeteilt und unter Druckaufbau komprimiert und ausgestoßen.

Eine derartige Teigverarbeitungsanlage ist aus der DE 35 30 724 bekannt. Sie umfaßt mehrere Teigteileinrichtungen, in denen je ein Meßkolben angeordnet ist. Die einzelnen Teigkammern sind durch eine Verriegelung des jeweiligen Meßkolbens außer Betrieb setzbar.

Nachteilig bei dieser Teigverarbeitungsanlage ist, daß die Verriegelung der Meßkolben mit einem Umbau der Teigverarbeitungsanlage verbunden ist.

In der DE 23 15 977 ist eine Teigverarbeitungsanlage offenbart, die einen hydraulisch angetriebenen Förderkolben aufweist, bei dem der Fülldruck durch ein Druckbegrenzungsventil verstellbar ist.

Aus der DE 195 00 851 ist ebenfalls eine Teigverarbeitungsanlage mit einem Förderkolben bekannt, dessen Förderhub unterbrochen wird, wenn in seinem Antriebszylinder ein eingestellter Druck überschritten wird.

Der Erfindung liegt die Aufgabe zugrunde, eine Teigverarbeitungsanlage der in Betracht stehenden Art so auszugestalten, daß der Fertigungsprozeß optimal an die jeweils verarbeitete Teigart anpaßbar ist, und daß darüberhinaus auch eine Einstellung des gewünschten Ausstoßes bei unveränderter Arbeitsgeschwindigkeit und ohne Eingriff in die Anlage als solche möglich sein soll.

Diese Aufgabe wird erfindungsgemäß dadurch gelöst, daß die jeweiligen Meßkolben über einen Zentralcomputer automatisch mittels eines elektrisch, elektromagnetisch, hydraulisch oder pneumatisch betätigbaren Riegels verriegelbar sind und/oder deren Fülldruck verstellbar ist.

Soweit im Vorstehenden von einer Ansteuerung über den Zentralcomputer die Rede ist, ist hierunter eine unmittelbare Ansteuerung über den Zentralcomputer oder eine mittelbare Ansteuerung durch Entnahme von Informationen aus einzelnen Anlageteilen zu verstehen.

Die erfindungsgemäße Ausgestaltung ermöglicht es, eine Teigverarbeitungsanlage ohne Umbauten und Eingriffe durch Bedienungspersonen, die hierzu notwendigerweise eine erhebliche Qualifikation und Erfahrung haben müßten, an individuelle Produktionsanforderungen sowohl hinsichtlich Quantität als auch Qualität anzupassen.

Im Sinne einer quantitativen Anpassung kann insbesondere vorgesehen sein, daß die Meßkolben gruppenweise verriegelbar sind, so daß über die Zentralcomputeranlage die Reihenzahl, z.B. von 5-reihig auf 4-reihig oder von 5-reihig auf 3-reihig veränderbar ist. Soweit die Dosierkolben als Doppelkolben ausgebildet sind, kann beispielsweise der Außenkolben verriegelt werden und nur der jeweilige Innenkolben aktiviert bleiben.

Vorteilhafterweise greift der Riegel im wesentlichen senkrecht zur Bewegungsrichtung des Meßkolbens in eine Arretierausnehmung des Meßkolbens ein. Hierdurch wird bei geringem Betätigungsweg des Riegels eine zuverlässige Verriegelung erzielt.

Im Sinne einer qualitativen Anpassung an die verwendete Teigart ist erfindungsgemäß neben einer vollständigen Verriegelung eines Kolbens auch eine Veränderung des Fülldrucks vorgesehen, so daß z.B. bei der Verarbeitung von Brezenteigen mit hohem Fülldruck und bei der Verarbeitung von Berliner Krapfen mit einem geringeren Fülldruck gearbeitet werden kann.

Die Verstellung des Fülldrucks erfolgt günstigerweise so, daß er über die hydraulische oder pneumatische Kraftübertragung auf einen Förderkolben zum, Beispiel über ein Proportionalventil des Pneumatik- bzw. Hydraulik- Kreises, gesteuert wird.

Nachfolgend wird die Erfindung anhand eines bevorzugten Ausführungsbeispiels in Verbindung mit der Zeichnung näher erläutert. Dabei zeigen:
- Fig. 1: eine blockschaltbildartige Darstellung des Hydraulik-Kreises zum Antrieb des Meßkolbens und
- Fig. 2: einen Stufenschnitt durch den Meßkolben und die Verriegelungseinrichtung.

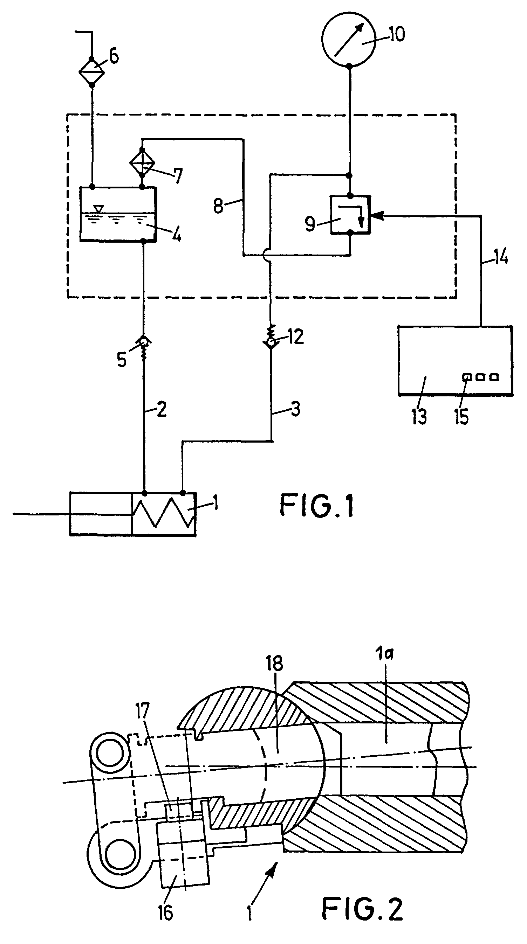

In Fig. 1 ist ein Meßkolben 1 mit einem Förderkolben 1a dargestellt, wobei letzterer über Hydraulik-Leitungen 2, 3 hydraulisch betätigbar ist. Der Hydraulik-Schaltkreis umfaßt ein Ölreservoir 4 mit nachgeschaltetem Kugelrückschlagventil 5. Dem Ölreservoir 4 ist ein Naßluftfilter 6 vorgeschaltet sowie eine Filterpatrone 7 in einer Leitung 8, die zu einem Proportionaldruckbegrenzungsventil 9 führt. Dem Ventil 9 ist eine Druckmeßeinrichtung 10 zugeordnet. Das Ventil 9 ist über die Leitung 3 und ein Kugelrückschlagventil 12 mit dem Meßkolben 1 verbunden. Ein Zentralcomputer 13 ist elektrisch über eine Leitung 14 mit dem Proportionaldruckbegrenzungsventil 9 verbunden, um hierüber eine Druckeinstellung am Meßkolben 1 vorzunehmen. Hierzu sind beispielsweise am Zentralcomputer Wahlschalter 15 vorgesehen, so daß je nach Teigart, z.B. Brezenteig oder Berliner Krapfen, eine Einstellung getroffen werden kann, wobei dann automatisch ein entsprechender abgespeicherter Fülldruck ausgewählt und über das Ventil 9 eingestellt wird.

Fig. 2 zeigt einen Teil des Meßkolbens 1. Eine detaillierte Beschreibung einer Teigverarbeitungsanlage der hier in Betracht stehenden Art mit Förderkolben 1a findet sich beispielsweise in der deutschen Patentanmeldung 195 00 851. Der Förderkolben 1a baut den Fülldruck auf und wird, wie in Verbindung mit Fig. 1 beschrieben, angesteuert.

Zur Verriegelung und damit zur Stillegung eines Meßkolbens oder einer Meßkolbengruppe dient ein von dem Zentralcomputer 13 aus angesteuerter Pneumatik-Zylinder 16, der mit einem Riegel 17 auf die Kolbenstange 18 einwirkt.

## Patentansprüche

1. Teigverarbeitungsanlage mit einer Steuerung, wobei aus einem Teigvorrat mittels einer Mehrzahl von Teigteil- und -dosiereinrichtungen mit einem Meßkolben je einem Gebäckstück entsprechende Teigmengen abgeteilt und einer gesonderten Weiterverarbeitung zugeführt werden, und wobei einzelne Meßkolben verriegelbar sind, **dadurch gekennzeichnet, daß** die jeweiligen Meßkolben (1) über einen Zentralcomputer automatisch mittels eines elektrisch, elektromagnetisch, hydraulisch oder pneumatisch betätigbaren Riegels (17) verriegelbar sind und vorzugsweise deren Fülldruck verstellbar ist.

2. Teigverarbeitungsanlage nach Anspruch 1, **dadurch gekennzeichnet, daß** die Meßkolben (1) gruppenweise verriegelbar sind.

3. Teigverarbeitungsanlage nach Anspruch 1, **dadurch gekennzeichnet, daß** der Riegel (17) im wesentlichen senkrecht zur Bewegungsrichtung des Meßkolbens (1) in eine Arretierausnehmung des Meßkolbens (1) eingreift.

4. Teigverarbeitungsanlage, wobei dem Meßkolben (1) ein Förderkolben (1a) zugeordnet ist, nach Anspruch 1, **dadurch gekennzeichnet, daß** der Fülldruck, der von dem Förderkolben (1a) aufgebracht wird, über die hydraulische bzw. pneumatische Kraftübertragung auf den Förderkolben eingestellt wird.

5. Teigverarbeitungsanlage nach Anspruch 4, **dadurch gekennzeichnet, daß** der Fülldruck über ein Proportionaldruckbegrenzungsventil (9) des Pneumatik- bzw. Hydraulik-Kreises eingestellt wird.

6. Teigverarbeitungsanlage nach Anspruch 5, **dadurch gekennzeichnet, daß** der Vorgabewert des Proportionaldruckbegrenzungsventils (9) mittels des Zentralcomputers rezeptabhängig einstellbar ist.

## Claims

1. A dough treatment facility comprising a control unit, wherein quantities of dough that correspond to baked goods are being metered from a supply of dough by means of a plurality of dough dividers and metering devices and delivered to separate further treatment, and wherein individual metering pistons are lockable, **characterized in that**, via a central processing unit, the respective metering pistons (1) are automatically lockable by means of an electrically, electro-magnetically, hydraulically or pneumatically actuated locking bar (17) and **in that** preferably the filling pressure thereof is adjustable.

2. A dough treatment facility according to claim 1, **characterized in that** the metering pistons (1) are lockable group-wise.

3. A dough treatment facility according to claim 1, **characterized in that** the locking bar (17) engages with an arresting recess of the metering piston (1) substantially vertically of the moving direction of the metering piston (1).

4. A dough treatment facility according to claim 5, wherein a delivery piston (1a) is allocated to the metering piston (1), **characterized in that** the filling pressure that is applied by the delivery piston (1a) is set by way of the hydraulic or pneumatic power transmission to the delivery piston.

5. A dough treatment facility according to claim 4, **characterized in that** the filling pressure is set by way of a proportional pressure control valve (9) of the pneumatic or hydraulic circuit.

6. A dough treatment facility according to claim 5, **characterized in that** the given value of the proportional pressure control valve (9) is adjustable by means of the central processing unit in dependence on a recipe.

## Revendications

1. Installation pour le traitement de pâte avec une commande, dans laquelle des quantités partielles correspondant à une pièce de boulangerie individuelle sont divisées depuis une réserve de pâte au moyen d'une multitude de dispositifs de division et de dosage de pâte avec un piston de mesurage, et amenées à une poursuite de traitement séparée, et avec des pistons de mesurage individuels susceptibles d'être verrouillés, **caractérisée en ce que** les pistons de mesurage (1) respectifs peuvent être verrouillés automatiquement par l'intermédiaire d'un ordinateur central au moyen d'un verrou (17) actionnable de manière électrique, électromagnétique, hydraulique ou pneumatique, et **en ce que** leur pression de remplissage est réglable.

2. Installation pour le traitement de pâte selon la revendication 1, **caractérisée en ce que** les pistons de mesurage (1) peuvent être verrouillés par groupes.

3. Installation pour le traitement de pâte selon la revendication 1, **caractérisée en ce que** le verrou (17) s'engage dans un évidement de blocage du piston de mesurage (1), sensiblement perpendiculairement à la direction de mouvement du piston de mesurage (1).

4. Installation pour le traitement de pâte, dans laquelle un piston de d'alimentation (1a) est assoçié au piston de mesurage (1), selon la revendication 1, **caractérisée en ce que** 1a pression de remplissage qui est appliquée par le piston d'alimentation (1a) est réglée par transmission de force hydraulique ou pneumatique sur le piston d'alimentation.

5. Installation pour le traitement de pâte selon la revendication 4, **caractérisée en ce que** la pression de remplissage est réglée par l'intermédiaire d'une soupape proportionnelle à limitation de pression (9) du circuit pneumatique ou hydraulique.

6. Installation pour le traitement de pâte selon la revendication 5, **caractérisée en ce que** la valeur prédéterminée de la soupape proportionnelle à limitation de pression (9) est réglable au moyen de l'ordinateur central, en fonction d'une recette.
